# EUROPEAN PATENT SPECIFICATION

(11) **EP 1 807 944 B1**
(45) Date of publication and mention of the grant of the patent: **30.04.2014**
(21) Application number: 05820476.9
(22) Date of filing: 03.11.2005
(51) Int. Cl.: H04W 52/02

(54) **MOBILE POWER HANDLING METHOD AND APPARATUS**
HANDHABUNGSVERFAHREN UND VORRICHTUNG FÜR MOBILE LEISTUNG
PROCEDE ET APPAREIL DE GESTION D'ENERGIE POUR MOBILES

(30) Priority: 04.11.2004 US 624882 P
(43) Date of publication of application: 18.07.2007
(73) Proprietor: LG Electronics Inc., Yeongdeungpo-gu Seoul 150-721 (KR)
(72) Inventor: KIM, Myeong-cheol, F-95880 Enghien-les-bains (FR); FISCHER, Patrick, F-92340 Bourg La Reine (FR)
(74) Representative: Katérle, Axel
(86) International application number: PCT/KR2005/003697
(87) International publication number: WO 2006/049441

(56) References cited:
- WO-A-98/16023
- WO-A-98/51108
- DE-A1- 10 242 913
- JP-A- 2003 078 470
- KR-A- 20000 073 606
- KR-A- 20020 017 681
- US-A- 6 032 050
- US-A1- 2002 131 396

## Description

### Technical Field

The present invention relates to an apparatus and method for applying different behavior for communications between user equipment (UE), such as a mobile communication terminal, and a network depending upon whether power saving functions are beneficial to the UE. Specifically, the invention is directed to a method and apparatus for determining when power saving functions are not beneficial to the UE and then limiting or inhibiting the use of power saving functions.

### Background Art

A universal mobile telecommunication system (UMTS) is a European-type, third generation IMT-2000 mobile communication system that has evolved from a European standard known as Global System for Mobile communications (GSM). UMTS is intended to provide an improved mobile communication service based upon a GSM core network and wideband code division multiple access (W-CDMA) wireless connection technology.

In December 1998, a Third Generation Partnership Project (3GPP) was formed by the ETSI of Europe, the ARIB/TTC of Japan, the T1 of the United States, and the TTA of Korea. The 3GPP creates detailed specifications of UMTS technology. In order to achieve rapid and efficient technical development of the UMTS, five technical specification groups (TSG) have been created within the 3GPP for standardizing the UMTS by considering the independent nature of the network elements and their operations.

Each TSG develops, approves, and manages the standard specification within a related region. Among these groups, the radio access network (RAN) group (TSG-RAN) develops the standards for the functions, requirements, and interface of the UMTS terrestrial radio access network (UTRAN), which is a new radio access network for supporting W-CDMA access technology in the UMTS.

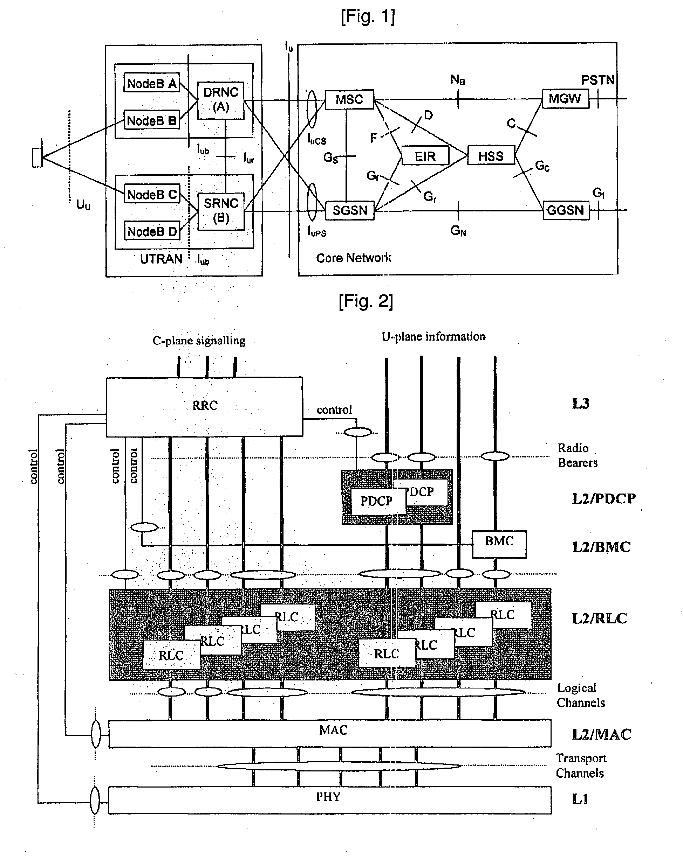

FIG. 1 gives an overview of the UMTS network, including the UE, the UTRAN and the core network. The UTRAN is composed of several radio network controllers (RNCs) and Node-Bs, which communicate via the Iub interface.

Each RNC controls several Node-Bs. Each RNC is connected via the Iu interface to the core network (CN), specifically to the MSC (Mobile-services Switching Center) and the SGSN (Serving GPRS Support Node) of the CN. RNCs can be connected to other RNCs via the Iur interface. The RNC handles the assignment and management of radio resources and operates as an access point with respect to the core network.

The Node-Bs receive information sent by the physical layer of the terminal through an uplink transmission and transmit data to the terminal through a downlink transmission. The Node-Bs operate as access points of the UTRAN for the terminal.

The SGSN is connected via the Gf interface to the EIR (Equipment Identity Register), via the GS interface to the MSC, via the GN interface to the GGSN (Gateway GPRS Support Node) and via the GR interface to the HSS (Home Subscriber Server). The EIR maintains lists of mobiles that are allowed to be used on the network.

The MSC, which controls the connection for circuit switch (CS) services. The MSC is connected to the MGW (Media Gateway) via the NB interface, to the EIR via the F interface, and to the HSS via the D interface. The MGW is connected to the HSS via the C interface and to the PSTN (Public Switched Telephone Network). The MGW facilitates adapting the codecs between the PSTN and the connected RAN.

The GGSN is connected to the HSS via the GC interface and to the Internet via the GI interface. The GGSN is responsible for routing, charging and separation of data flows into different radio access bearers (RABs). The HSS handles the subscription data of the users.

The UTRAN constructs and maintains a radio access bearer (an RAB) for communication between the terminal and the core network. The core network requests end-to-end quality of service (QoS) requirements from the RAB and the RAB supports the QoS requirements set by the core network. Accordingly, the UTRAN can satisfy the end-to-end QoS requirements by constructing and maintaining the RAB.

The services provided to a specific terminal are roughly divided into circuit switched (CS) services and packet switched (PS) services. For example, a general voice conversation service is a circuit switched service, while a Web browsing service via an Internet connection is classified as a packet switched (PS) service.

For supporting circuit switched services, the RNCs are connected to the mobile switching center (MSC) of the core network and the MSC is connected to the gateway mobile switching center (GMSC) that manages the connection with other networks. For supporting packet switched services, the RNCs are connected to the serving general packet radio service (GPRS) support node (SGSN) and the gateway GPRS support node (GGSN) of the core network. The SGSN supports the packet communications with the RNCs and the GGSN manages the connection with other packet switched networks, such as the Internet.

FIG. 2 illustrates a structure of a radio interface protocol between the terminal and the UTRAN according to the 3GPP radio access network standards. As shown in FIG. 2, the radio interface protocol has vertical layers comprising a physical layer, a data link layer, and a network layer, and has horizontal planes comprising a user plane (U-plane) for transmitting user data and a control plane (C-plane) for transmitting control information.

The user plane is a region that handles traffic information with the user, such as voice or Internet protocol (IP) packets. The control plane is a region that handles control information for an interface with a network, maintenance and management of a call, and the like.

The protocol layers in FIG. 2 can be divided into a first layer (L1), a second layer (L2), and a third layer (L3) based on the three lower layers of an open system interconnection (OSI) standard model. The first layer (L1), or the physical layer, provides an information transfer service to an upper layer by using various radio transmission techniques. The physical layer is connected to an upper layer, called a medium access control (MAC) layer, via a transport channel.

The MAC layer and the physical layer exchange data via the transport channel. The second layer (L2) includes a MAC layer, a radio link control (RLC) layer, a broadcast/ multicast control (BMC) layer and a packet data convergence protocol (PDCP) layer.

The MAC layer handles mapping between logical channels and transport channels and provides allocation of the MAC parameters for allocation and re-allocation of radio resources. The MAC layer is connected to an upper layer, called the radio link control (RLC) layer, via a logical channel.

Various logical channels are provided according to the type of information transmitted. In general, a control channel is used to transmit information of the control plane and a traffic channel is used to transmit information of the user plane.

A logical channel may be a common channel or a dedicated channel depending on whether the logical channel is shared. Logical channels include a dedicated traffic channel (DTCH), a dedicated control channel (DCCH), a common traffic channel (CTCH), a common control channel (CCCH), a broadcast control channel (BCCH) and a paging control channel (PCCH) or a Shared Channel Control Channel.

The BCCH provides information including information utilized by a terminal to access a system. The PCCH is used by the UTRAN to access a terminal.

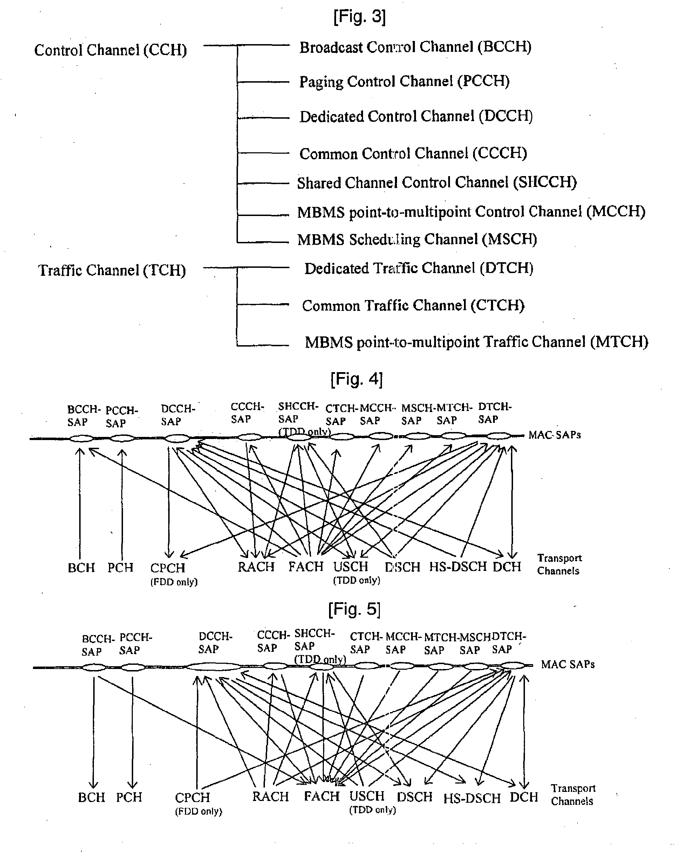

For the purposes of a multimedia broadcast/multicast service (MBMS) additional traffic and control channels are introduced in the MBMS standard. The MCCH (MBMS point-to-multipoint Control Channel) is used for transmission of MBMS control information. The MTCH (MBMS point-to-multipoint Traffic Channel) is used for transmitting MBMS service data. The MSCH (MBMS Scheduling Channel) is used to transmit scheduling information. The different logical channels that exist are listed in FIG. 3.

The MAC layer is connected to the physical layer by transport channels and can be divided into a MAC-b sub-layer, a MAC-d sub-layer, a MAC-c/sh sub-layer, a MAC-hs sub-layer and a MAC-m sublayer according to the type of transport channel being managed. The MAC-b sub-layer manages a BCH (Broadcast Channel), which is a transport channel handling the broadcasting of system information. The MAC-c/sh sub-layer manages a common transport channel, such as a forward access channel (FACH) or a downlink shared channel (DSCH), which is shared by a plurality of terminals, or in the uplink the Radio Access Channel (RACH). The MAC-m sublayer may handle the MBMS data.

The possible mapping between the logical channels and the transport channels from a UE perspective is given in FIG. 4. The possible mapping between the logical channels and the transport channels from a UTRAN perspective is given in FIG. 5.

The MAC-d sub-layer manages a dedicated channel (DCH), which is a dedicated transport channel for a specific terminal. The MAC-d sublayer is located in a serving RNC (SRNC) that manages a corresponding terminal. One MAC-d sublayer also exists in each terminal.

The RLC layer, depending of the RLC mode of operation, supports reliable data transmissions and performs segmentation and concatenation on a plurality of RLC service data units (SDUs) delivered from an upper layer. When the RLC layer receives the RLC SDUs from the upper layer, the RLC layer adjusts the size of each RLC SDU in an appropriate manner based upon processing capacity and then creates data units by adding header information thereto. The data units, called protocol data units (PDUs), are transferred to the MAC layer via a logical channel. The RLC layer includes a RLC buffer for storing the RLC SDUs and/or the RLC PDUs.

The BMC layer schedules a cell broadcast (CB) message transferred from the core network and broadcasts the CB message to terminals positioned in a specific cell or cells.

The PDCP layer is located above the RLC layer. The PDCP layer is used to transmit network protocol data, such as the IPv4 or IPv6, effectively on a radio interface with a relatively small bandwidth. For this purpose, the PDCP layer reduces unnecessary control information used in a wired network, a function called header compression.

The radio resource control (RRC) layer located at the lowest portion of the third layer (L3) is only defined in the control plane. The RRC layer controls the transport channels and the physical channels in relation to setup, reconfiguration, and the release or cancellation of the radio bearers (RBs). Additionally the RRC handles user mobility within the RAN and additional services, such as location services.

The RB signifies a service provided by the second layer (L2) for data transmission between the terminal and the UTRAN. In general, the set up of the RB refers to the process of stipulating the characteristics of a protocol layer and a channel required for providing a specific data service, and setting the respective detailed parameters and operation methods.

The different possibilities that exist for the mapping between the radio bearers and the transport channels for a given UE are not all possible all the time. The UE and UTRAN deduce the possible mapping depending on the UE state and the procedure that the UE and UTRAN are executing. The different states and modes are explained in more detail below, as far as they concern the present invention.

The different transport channels are mapped onto different physical channels. For example, the RACH transport channel is mapped on a given PRACH, the DCH can be mapped on the DPCH, the FACH and the PCH can be mapped on the S-CCPCH, the DSCH is mapped on the PDSCH. The configuration of the physical channels is given by RRC signaling exchange between the RNC and the UE.

The RRC mode refers to whether there exists a logical connection between the RRC of the terminal and the RRC of the UTRAN. If there is a connection, the terminal is said to be in RRC connected mode. If there is no connection, the terminal is said to be in idle mode.

Because an RRC connection exists for terminals in RRC connected mode, the UTRAN can determine the existence of a particular terminal within the unit of cells. For example, the UTRAN can determine in which cell or set of cells an RRC connected mode terminal is located and to which physical channel the UE is listening. Thus, the terminal can be effectively controlled.

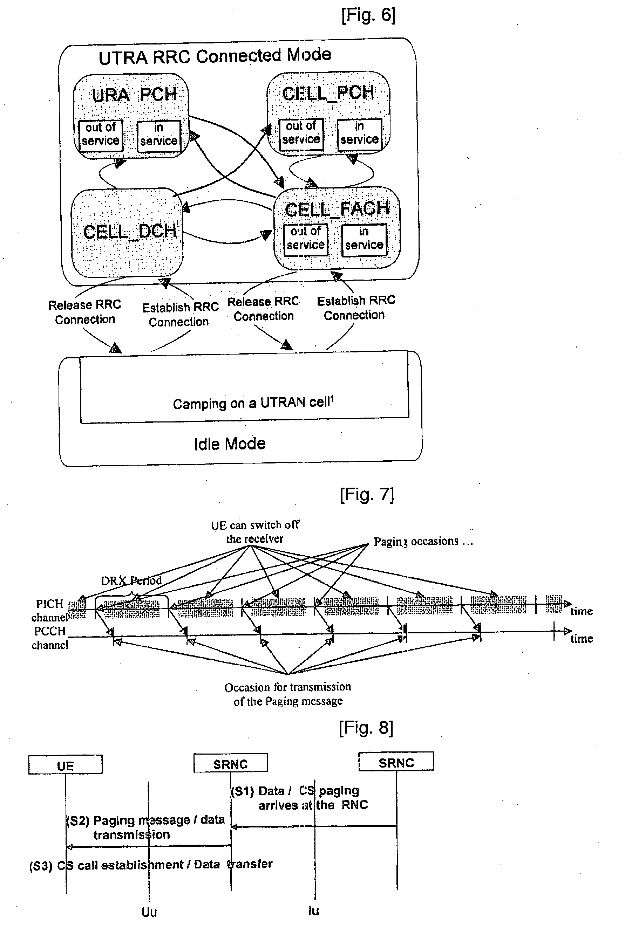

In contrast, the UTRAN cannot determine the existence of a terminal in idle mode. The existence of idle mode terminals can only be determined by the core network to be within a region that is larger than a cell, for example, a location or a routing area. Therefore, the existence of idle mode terminals is determined within large regions, and, in order to receive mobile communication services such as voice or data, the idle mode terminal must move or change into the RRC connected mode. The possible transitions between modes and states are shown in FIG. 6.

A UE in RRC connected mode can be in different states, such as CELL_FACH state, CELL_PCH state, CELL_DCH state or URA_PCH state. Depending on the state, the UE carries out different actions and listens to different channels.

For example, a UE in CELL_DCH state will try to listen to DCH type of transport channels, among others. DCH types of transport channels include DTCH and DCCH transport channels, which can be mapped to a certain DPCH, DPDSCH or other physical channels.

The UE in CELL_FACH state will listen to several FACH transport channels, which are mapped to a certain S-CCPCH. A UE in PCH state will listen to the PICH channel and the PCH channel, which are mapped to a certain S-CCPCH physical chann el.

The 3GPP system can provide multimedia broadcast multicast service (MBMS), which is a new type of service in Release 6. The 3GPP TSG SA (Service and System Aspect) defines various network elements and their functions required for supporting MBMS services.

A cell broadcast service provided by the conventional Release 99 is limited to a service in which text type short messages are broadcast to a certain area. The MBMS service provided by Release 6 is a more advanced service that multicasts multimedia data to terminals (UEs) that have subscribed to the corresponding service in addition to broadcasting multimedia data.

For reception of MBMS services, the UE listens to MTCH, MSCH, MCCH and MICH. MTCH, MSCH and MCCH are mapped to FACH. The channel to which MICH is mapped is not yet decided.

In order to decrease battery consumption and to increase standby time it is beneficial if the UE can switch off the receiver for periods of time. This process is called DRX (Discontinuous Reception).

FIG. 7 shows the principle of DRX. The UE turns on its receiver during "paging occasions" which are predefined and occur periodically every DRX period. DRX is be normally used in idle mode, but can also be used when the UE has an established connection to the PS CN domain.

The UE listens to the PICH channel (Paging Indicator Channel) during the paging occasions. If the RNC wants to communicate with the UE, it sends a specific indication to the UE during a paging occasion. The indication informs the UE that it has to listen to the PCCH (Paging Control Channel) in order to receive a message that indicates a requested UE action.

When the UE is not using DRX mode, such as when the UE is in CELL_FACH or CELL_DCH state, the RNC can send information that it receives from the CN directly to the UE. This process is shown in FIG. 8.

The RNC receives information to be conveyed to the UE, such as data, control information or paging information in order to inform the UE of an incoming CS call (step S1). The RNC transmits the information immediately to the UE on the dedicated or shared channel (step S2). When the UE has received the information from the CN it establishes a connection to the CS domain for the CS call or continues the data transfer (step S3).

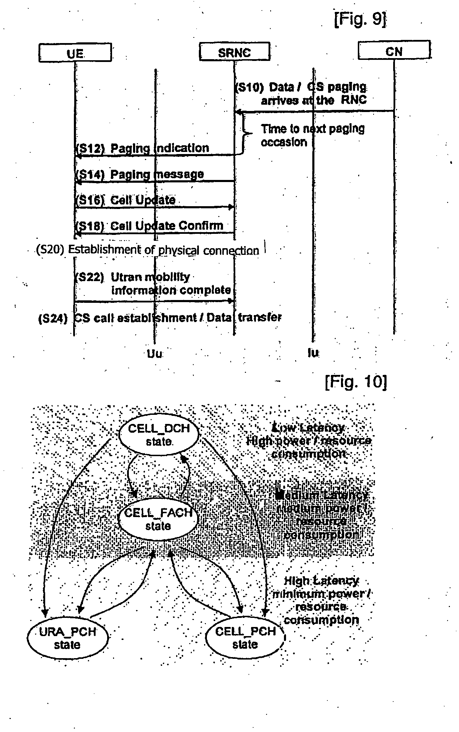

When the UE is using DRX additional latency is added to the data exchange. This process is shown in FIG. 9.

The RNC receives information to be conveyed to the UE, such as data, control information or paging information in order to inform the UE of an incoming CS call (step S10). In order to inform the UE about the data or paging request, the RNC must to wait for a paging occasion when it can send an indication on the PICH to inform the UE to listen to the paging channel (step S12).

The RNC sends a Paging message on the PCCH (step S 14). The Paging message indicates that the UE must send a Cell Update message to receive the data or to transmit the necessary messages in order to establish a connection with the CS domain. The UE sends a Cell Update message to the RNC to indicate that it is now listening to the FACH channel (step S16).

The RNC sends the Cell Update Confirm message to the UE on the FACH (step S 18). The Cell Update Confirm message informs the UE of the configuration to use for further transmission of data. The Cell Update Confirm message may include information for the transition to CELL_DCH state.

If the UE is commanded by the Cell Update Confirm message to transition to CELL_DCH state, the UE transitions to the CELL_DCH state and establishes the necessary physical channel (step S20). The UE sends a UTRAN Mobility Information Complete message to the RNC to confirm that it has successfully changed its state (step S22).

When the UE has received the information from the CN, it establishes a connection to the CS domain for the CS call or continues the data transfer (step S24). The RNC determines a state to which the UE should transition based upon, for example, the services that the UE uses, information about traffic measurements and available radio resources.

FIG. 10 gives an overview on the advantages and disadvantages of the different states. In CELL_DCH state, latency is very low but power and resource consumption is very high. From CELL_DCH state the UE can transition to any other state.

In CELL_FACH state, latency is generally higher since FACH and RACH, and possibly other channels, are shared by different users. The UE can transition to CELL_FACH state from any other state and can transition to any other state from CELL_FACH state.

In URA/CELL_PCH state, latency is greatest since the UE only listens to the PICH channel and can only transition out of CELL/URA_PCH state via the CELL_FACH state. The UE can transition into CELL/URA_PCH state from CELL_FACH state or from CELL_DCH state.

When the UE is connected to an external power source it should change behavior in order to disable power saving functions, which might disturb the user, and reduce the use of schemes such as DRX, which add latency to data transmission. Some changes in UE behavior may be accomplished easily, such as those functions performed locally in the UE. However, other functions, such as DRX, are controlled by the network and cannot, therefore, be easily changed.

Since the network has no means to check whether the UE has some special restrictions related to power management, the same methods for power saving are always applied. Furthermore, the UE locally always applies all the power saving schemes.

Document WO 98/16023 concerns a portable RF telephone to be connected with a cradle within a vehicle. The cradle provides power supply from the vehicle battery and comprises an external antenna. When the telephone is placed in the cradle, the telephone ignores or reduces the amount of decrease in transmitting power requested by a basestation.

Document WO 98/51108 concerns a hand-held cellular telephone having power management features. When the mobile radio telephone is operated in a hand-held mode, the power control logic of the telephone sets the power level and a maximum hand-held power level which is less than a maximum transmit power level.

Therefore, there is need for a mechanism to provide the network with information regarding when power saving mechanism are not needed and to more efficiently alter UE behaviour when power saving mechanisms are not needed. The present invention addresses these and other needs.

### Disclosure of Invention

### Technical Problem

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

In particular, some or all of the above problems are overcome by the method having the features of claim 1, the method having the features of claim 16 and the mobile communication terminal having the features of claim 17.

The invention is directed to provide an apparatus and method for applying different behaviour for communications between user equipment (UE and a network depending upon whether power saving functions are beneficial to the UE. A determination is made whether power saving functions are beneficial to the UE and then the use of power saving functions is limited or inhibited.

In one aspect of the present invention, a method of communication between a network and a mobile communication terminal is provided. The method includes determining whether power saving functions are beneficial to the mobile communication terminal and either performing power saving functions or not performing power saving functions according to the determination. Preferably, power saving functions are performed when determined as beneficial and power saving functions are not performed when determined as not beneficial.

It is contemplated that an indication may be provided to the network whether power saving functions are beneficial to the mobile communication terminal. The indication may include a device type of the mobile communication terminal or a serial number of the mobile communication terminal.

Preferably, the network includes a radio network controller (RNC) and the indication is provided in a radio resource control (RRC) message. Preferably, the RRC message is either an RRC connection setup complete message or a UE capability information message.

It is contemplated that the indication is provided upon establishing a connection with the network. It is further contemplated that the indication provided to the network us updated to reflect whether power saving functions are currently beneficial to the mobile communication terminal during the connection with the network.

Preferably, power saving functions are determined as not beneficial when the mobile communication terminal is connected to an external power source and power saving functions are determined as beneficial when the mobile communication terminal is not connected to an external power source. It is contemplated that the determination may be made after receiving information from an external entity. It is further contemplated that the information is received from the network or from the mobile communication terminal. On the other hand, it is contemplated that the determination may be made without receiving any information from an external entity.

It is contemplated that the determination may be based on whether the mobile communication terminal is connected to an external power supply, a device type of the mobile communication terminal or whether the mobile communication terminal is connected to another device that provides power. It is further contemplated that the determination may be made after an International Mobile station Equipment Identity and Software Version number (IMEI / IMEISV) is provided to the network.

It is contemplated that the method may include rejecting commands to perform power saving functions when determined as not beneficial. Preferably, a cause value for rejecting the commands is provided. Specifically, not performing power saving functions may include not switching off a backlight of the mobile communication terminal, increasing the time before a backlight of the mobile communication terminal is switched off, maintaining a connection to a device, receiving additional information, activating services, storing time non-critical data or increasing processing power.

It is contemplated that the method may include receiving an indication whether power saving functions are beneficial to the mobile communication terminal. It is further contemplated that the indication may be received from the mobile communication terminal. Preferably, the indication includes a device type of the mobile communication terminal or a serial number of the mobile communication terminal.

It is contemplated that the indication is received in a radio resource control (RRC) message. Preferably, the RRC message is a RRC connection setup complete message or a UE capability information message.

It is contemplated that the indication is received upon establishing a connection with the mobile communication terminal. Preferably, the indication is updated to reflect whether power saving functions are currently beneficial to the mobile communication terminal during the connection with the mobile terminal.

It is contemplated that the indication may be received from a network entity, such as a core network. Preferably, the indication is received from a network source entity upon relocation of control of the mobile communication terminal from the network source entity such as a radio network controller.

It is contemplated that the method may include transmitting an indication to the mobile communication terminal whether power saving functions are beneficial to the mobile communication terminal. Preferably, the determination is made after receiving an International Mobile station Equipment Identity and Software Version number (IMEI / IMEISV) from the mobile communication terminal with the determination based on the IMEI / IMEISV.

It is contemplated that the method may include receiving a cause value for rejecting commands to perform power saving functions from the mobile communication terminal. Preferably, not performing power saving functions includes maintaining the mobile communications terminal in a dedicated RRC state for a longer period of time, maintaining the mobile communication terminal in a shared RRC state for a longer period of time, adjusting a timer used to detect mobile communication terminal inactivity, configuring different mobile communication terminal traffic volume measurements or decreasing the delay between mobile communication terminal traffic volume measurements.

In another aspect of the present invention, a method of communication between a network and a mobile communication terminal is provided. The method includes determining whether power saving functions are beneficial to the mobile communication terminal and providing an indication to the network whether power saving functions are beneficial to the mobile communication terminal.

It is contemplated that the indication includes a device type of the mobile communication terminal or a serial number of the mobile communication terminal. Preferably, power saving functions are determined as not beneficial when the mobile communication terminal is connected to an external power source and power saving functions are determined as beneficial when the mobile communication terminal is not connected to an external power source.

In another aspect of the present invention, a method of communication between a network and a mobile communication terminal is provided. The method includes receiving an indication from the mobile communication terminal whether power saving functions are beneficial to the mobile communication terminal and performing power saving functions if indicated as beneficial and not performing power saving functions if indicated as not beneficial. Preferably, the indication includes a device type of the mobile communication terminal or a serial number of the mobile communication terminal.

In another aspect of the present invention, a mobile communication terminal is provided. The mobile communication terminal is adapted to perform the methods disclosed herein in order to apply different behavior for communications between the mobile communication terminal and a network depending upon whether power saving functions are beneficial to the mobile communication terminal.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### Description of Drawings

The accompanying drawings, which are included to provide a further understanding of the invention and are incorporated in and constitute a part of this specification; illustrate embodiments of the invention and together with the description serve to explain the principles of the invention. Features, elements, and aspects of the invention that are referenced by the same numerals in different figures represent the same; equivalent, or similar features, elements, or aspects in accordance with one or more embodiments.
FIG. 1 illustrates a conventional UMTS network.
FIG. 2 illustrates a conventional radio interface protocol between a UE and UTRAN.
FIG. 3 illustrates the logical channels for a conventional UMTS.
FIG. 4 illustrates the possible mapping between logical channels and transport channel from UE perspective.
FIG. 5 illustrates the possible mapping between logical channels and transport channel from UTRAN perspective.
FIG. 6 illustrates possible UE state transitions.
FTG. 7 illustrates DRX operations of a UE.
FIG. 8 illustrates paging/data transmission between RNC and UE in non-DRX mode.
FIG. 9 illustrates paging/data transmission between RNC and UE in DRX mode.
FIG. 10 illustrates advantages and disadvantages of RRC states.
FIG. 11 illustrates different possibilities for determining whether a UE needs to perform power saving functions according to the present invention.
FIG. 12 illustrates a mobile communication terminal according to the present invention.

### Mode for Invention

The present invention relates to applying different behavior for communications between user equipment (UE) and a network depending upon whether power saving functions are beneficial to the UE. Specifically, the invention is directed to a method and apparatus for determining when power saving functions are not beneficial, such as when the UE is connected to an external power source, and then limiting or inhibiting the use of power saving functions. Although the present invention is illustrated with respect to a mobile communication device, it is contemplated that the present invention may be utilized anytime it is desired to limit power saving functions when they are determined as not being beneficial.

In one embodiment of the invention, the network may apply different behavior to communications with a UE when it is aware that power saving functions are not beneficial to the UE or there is no need to apply any special power saving functions for the UE. The different network behavior could be, for example, applying a different network RRM (Radio Resource Management) strategy.

The network may receive information from a device that indicates that power saving functions are not beneficial to the UE and, therefore, not necessary. This information may be provided to the network at the establishment of a connection with the network or the information could be updated during an existing connection. When a serving network entity changes, the information must be transferred from the old network serving entity to the new network serving entity.

The information may be stored in the network or derived from some other information. The UE, the core network (CN), or another entity such as a radio network controller (RNC) may provide the information. Based on this or similar information, the network may determine whether power management functions should be applied.

When the UE sets up a connection with the network it sends information regarding the UE type, the UE serial number, and the software number. In GSM / UMTS networks, information regarding the software is referred to as the IMEI / IMEISV (International Mobile station Equipment Identity and Software Version Number).

The nature of the UE may determine if power saving functions are necessary. For example, if the UE type indicates that a mobile terminal is built for installation in a car or used as a PCMCIA device where the power supply is less critical, it may be determined that power saving functions should not be implemented.

The UE may indicate to a radio network controller (RNC) that it is connected to an external power supply, that it does not need to transition to the CELL_PCH state or URA_PCH state or that it does not need to perform power saving algorithms. Based on the indication, the RNC may exhibit different behavior regarding radio resource management.

The RNC may keep the UE in CELL_FACH state or CELL_DCH state for a longer time. If the RNC uses a timer to detect the inactivity, the RNC may adapt the timer to a more appropriate value when power saving functions are not necessary. The RNC may configure different traffic volume measurements in the UE in order to apply different criteria, such as indicating that, although there is less traffic, the UE has data to transmit, or decreasing the delay between transmissions of traffic volume measurement events. Other possible behaviors may be exhibited depending upon the global strategy of the RRM (radio resource management) in the RNC.

The indication from the UE may be provided directly from the UE to the network in an appropriate RRC message, such as a Radio Resource Control (RRC) message. The appropriate message may be a message that is normally used to indicate UE capabilities, for example, a RRC Connection Setup Complete message or a UE capability information message in a UMTS system.

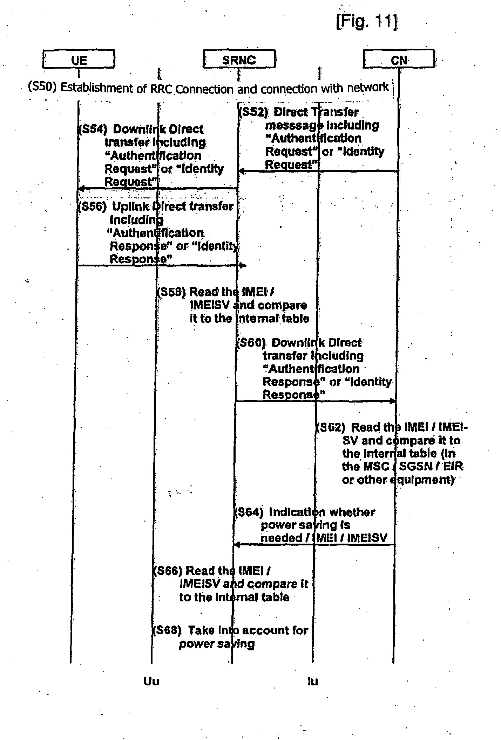

The RNC may also receive the indication either from the core network (CN) or from any other entity. The determination may be based on the IMEI / IMEISV from the UE. FIG. 11 illustrates different possibilities for the RNC or CN determining whether the UE needs to perform power saving functions based on the IMEI / IMEISV.

Once an RRC connection is established and the connection to the CN is established (step S50), the CN sends an Authentication Request message or Identity Request message to the UE via the RNC. The Authentication Request message or Identity Request message is transmitted to the RNC in a Direct transfer message (Step S52).

The RNC forwards the Authentication Request message or Identity Request message in a Downlink Direct transfer to the UE (Step S54). The RNC requests the IMEI / IMEISV.

The UE responds with an Uplink Direct Transfer including an Authentication Response message or Identity Response message (Step S56). The Authentication Response message or Identity Response message includes the IMEI / IMEISV.

The RNC may decode the Authentication Response message or Identity Request message. The RNC then utilizes an internal lookup table and the IMEI / IMEISV to determine whether the UE needs any power saving functions (Step S58).

Alternately, the RNC forwards the Authentication Response message or Identity Response message to the CN. The RNC includes the Authentication Response message or Identity Request message in a Downlink Direct transfer to the CN (Step S60).

The CN then uses an internal lookup table and the IMEI / IMEISV to determine whether the UE needs any power saving functions (step S62). The determination may be performed in the MSC, SGSN, or EIR. The CN then indicates to the RNC whether power saving functions are beneficial to the UE (step S64)

Alternately, the CN may return the IMEI / IMEISV to the RNC (step S64). The] RNC then utilizes an internal lookup table and the IMEI / IMEISV to determine whether the UE needs any power saving functions (Step S66).

The RNC considers whether the UE needs power saving functions when making the RRM decisions (Step S68). Information indicating whether the UE needs power saving functions may be stored in the serving RNC (SRNC).

If the SRNC changes, the information may be transmitted from the current SRNC to a target SRNC during a relocation procedure. For example, the information may be transmitted in a Relocation Required or Relocation Request message sent on the Iu interface. The information may be included in the message either directly, as an information element, or indirectly as a transparent container, such as a sequence of information not decoded by the CN. Alternately, the new SRNC may receive information such as the IMEI / IMEISV or an indication whether the UE needs power saving functions, from the UE or CN.

In another embodiment of the invention, the UE may apply different behavior to communications with a network when power saving functions are not beneficial to the UE or when there is no need to apply any special power saving functions for the UE. The UE may make this determination on its own or by utilizing information from other devices.

There are some circumstances under which a UE is connected to an external power source. This condition may be permanent, for example, when the UE is integrated into a car. This condition may be temporary, for example, when the UE is connected to a battery charger cable.

There are other circumstances under which a UE is connected to another device that provides power from an internal power supply. For example, if the UE is used as a PCMCIA card inside a laptop computer or a PDA, or is integrated into such a device, the UE may use the power supply of the PDA / Laptop computer as its power source.

When the UE cannot determine on its own whether power saving functions are not beneficial to the UE, information may be received from another device indicating whether power saving is necessary. The UE may communicate with the other device that provides a power supply in order to determine whether battery saving is necessary. This information may be exchanged via USB (Universal Serial Bus) or any other interface technology.

In another embodiment of the invention, the UE may avoid performing power saving procedures, such as DRX, by rejecting messages that command the UE to perform such power saving functions. The rejection of commands is dependent upon whether it is beneficial to the UE to use power saving functions.

For example, the UE may reject commands to transition to CELL_PCH state or URA_PCH state. When the UTRAN sends a Radio Bearer Setup message, Radio Bearer Release message, Radio Bearer Reconfiguration message, Transport Channel Reconfiguration message, Physical Channel Reconfiguration message, UTRAN Mobility Information message or Cell Update Confirm message to the UE ordering the UE to transition to the CELL_PCH state or URA_PCH state, the UE may reject the command.

The UE may reject the command by transmitting, for example, a Radio Bearer Setup Failure message, Radio Bearer Release Failure message, Radio Bearer Reconfiguration Failure message, Transport Channel Reconfiguration Failure message, Physical Channel Reconfiguration Failure message, UTRAN Mobility Information Failure message or UTRAN Mobility Information Failure message. Additionally, the UE may indicate in one of the above messages that the "Failure" is due to the fact that the UE refuses to enter the commanded state.

The "Failure" message may include a cause value. The cause value may indicate, for example, the UE refuses to enter the commanded state in order to reduce latency or because power saving functions are unnecessary since the UE does not presently rely on a battery.

There are several behaviors that could be exhibited by a UE once it is determined that power saving functions are not necessary. The UE may function differently, or in a way that is different from when it is determined that power saving functions are necessary. Alternately, the UE may indicate to a network that power saving functions are not beneficial.

The UE may not switch off a backlight at all, not switch off a backlight while the user is in a conversation or increase a time before a backlight is switched off. The UE may keep a connection, such as a PDP context, active even when the user is inactive. The UE may receive broadcast information when it ordinarily would not or receive more broadcast information than usual. The UE may activate download services or request that time non-critical data stored in the UE. The UE may increase processing power, for example, in order to use more powerful video compression algorithms.

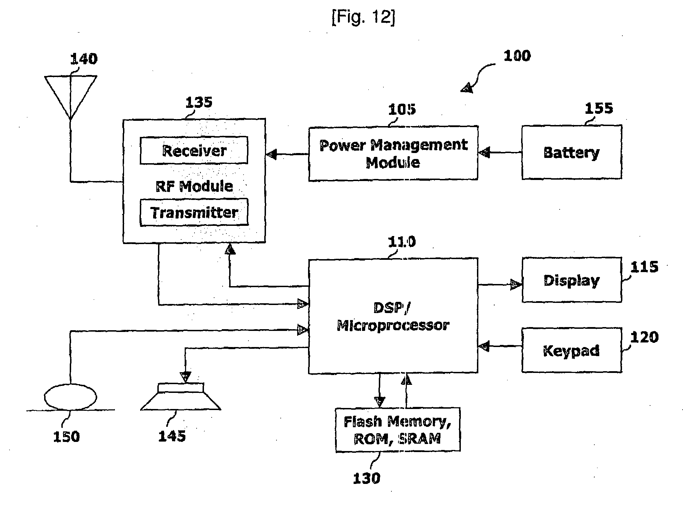

Referring to FIG. 12, a block diagram of a mobile communication terminal 100 of the present invention is illustrated, for example a mobile phone for performing the methods of the present invention. The mobile communication device 100 includes a processing unit 110 such as a microprocessor or digital signal processor, an RF module 135, a power management module 105, an antenna 140, a battery 155, a display 115, a keypad 120, a memory unit 130 such as flash memory, ROM or SRAM, a speaker 145 and a microphone 150.

A user enters instructional information, such as a telephone number, for example, by pushing the buttons of a keypad 120 or by voice activation using the microphone 150. The processing unit 110 receives and processes the instructional information to perform the appropriate function, such as to dial the telephone number. Operational data may be retrieved from the memory unit 130 to perform the function. Furthermore, the processing unit 110 may display the instructional and operational information on the display 115 for the user's reference and convenience.

The processing unit 110 issues instructional information to the RF section 135, to initiate communication, for example, transmit radio signals comprising voice communication data. The RF section 135 comprises a receiver and a transmitter to receive and transmit radio signals. The antenna 140 facilitates the transmission and reception of radio signals. Upon receiving radio signals, the RF module 135 may forward and convert the signals to baseband frequency for processing by the processing unit 110. The processed signals would be transformed into audible or readable information outputted via the speaker 145, for example.

The processing unit 110 is adapted to perform the methods disclosed herein in order to determine whether power saving functions are beneficial to the mobile communication terminal and either perform power saving functions or not perform power saving functions according to the determination. The memory unit 130 is adapted to store information related to power saving functions that the mobile communication terminal may perform.

It will be apparent to one skilled in the art that the mobile communication device 100 may be readily implemented using, for example, the processing unit 110 or other data or digital processing device, either alone or in combination with external support logic. Although the present invention is described in the context of mobile communication, the present invention may also be used in any wireless communication systems using mobile devices, such as PDAs and laptop computers equipped with wireless communication capabilities. Moreover, the use of certain terms to describe the present invention should not limit the scope of the present invention to certain type of wireless communication system, such as UMTS. The present invention is also applicable to other wireless communication systems using different air interfaces and/ or physical layers, for example, TDMA, CDMA, FDMA, WCDMA, etc.

The preferred embodiments may be implemented as a method, apparatus or article of manufacture using standard programming and/or engineering techniques to produce software, firmware, hardware, or any combination thereof. The term "article of manufacture" as used herein refers to code or logic implemented in hardware logic (e.g., an integrated circuit chip, Field Programmable Gate Array (FPGA), Application Specific Integrated Circuit (ASIC), etc.) or a computer readable medium (e.g., magnetic storage medium (e.g., hard disk drives, floppy disks, tape, etc.), optical storage (CD-ROMs, optical disks, etc.), volatile and non-volatile memory devices (e.g., EEPROMs, ROMs, PROMs, RAMs, DRAMs, SRAMs, firmware, programmable logic, etc.). Code in the computer readable medium is accessed and executed by a processor. The code in which preferred embodiments are implemented may further be accessible through a transmission media or from a file server over a network. In such cases, the article of manufacture in which the code is implemented may comprise a transmission media, such as a network transmission line, wireless transmission media, signals propagating through space, radio waves, infrared signals, etc. Of course, those skilled in the art will recognize that many modifications may be made to this configuration without departing from the scope of the present invention, and that the article of manufacture may comprise any information bearing medium known in the art.

The logic implementation shown in the figures described specific operations as occurring in a particular order. In alternative implementations, certain of the logic operations may be performed in a different order, modified or removed and still implement preferred embodiments of the present invention. Moreover, steps may be added to the above described logic and still conform to implementations of the invention.

While the present invention has been particularly shown and described with reference to exemplary embodiments thereof, it will be understood by those skilled in the art that various changes in form and details may be made therein without departing from the scope of the present invention as defined by the appended claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method of communication between a network and a mobile communication terminal (100), the method being **characterized by**:
determining, in the mobile communication terminal that the mobile communication terminal does not benefit from at least one power saving function, applied according to network power management functions wherein the at least one power saving function is for a battery consumption optimization of the mobile communication terminal (100),
providing, from the mobile communication terminal via a wireless communication link, an indication to the network wherein the indication indicates that the mobile communication terminal is a device type that does not benefit from the at least one power saving function, wherein
the indication is provided in a radio resource control, RRC, message that is either an RRC connection setup complete message or a user equipment, UE, capability information message, and
wherein the indication is set to a specific value in order to indicate that the mobile communication terminal does not benefit from the at least one power saving function.

2. The method of claim 1, further comprising
not performing the power saving function when the at least one power saving function is determined as not beneficial.

3. The method of claim 1 or 2, wherein the indication comprises a serial number of the mobile communication terminal (100).

4. The method of any of claims 1 to 3, wherein the network comprises a radio network controller, RNC.

5. The method of any of claims 1 to 4, wherein the indication is provided upon establishing a connection with the network.

6. The method of claim 5, further comprising
updating the indication provided to the network to reflect whether the power saving function is currently beneficial to the mobile communication terminal (100) during the connection with the network.

7. The method of any of claims 1 to 6, the power saving function is determined as beneficial when the mobile communication terminal (100) is not connected to an external power source.

8. The method of any of claims 1 to 7, wherein determining further comprises receiving information from an external entity.

9. The method of claim 8, wherein the information is received from the network.

10. The method of any of claims 1 to 7, wherein determining is performed without receiving any information from an external entity.

11. The method of any of claims 1 to 10, wherein the determination is based on one of whether the mobile communication terminal (100) is connected to an external power supply, and whether the mobile communication terminal (100) is connected to another device that provides power.

12. The method of any of claims 1 to 11, further comprising
providing an International Mobile station Equipment Identity and Software Version number, IMEI / IMEISV, to the network.

13. The method of any of claims 1 to 12, further comprising
rejecting at least one command to perform the power saving function when it is determined as not beneficial.

14. The method of claim 13, further comprising
providing a cause value for rejecting the at least one command to the network.

15. The method of claim 2, wherein not performing the power saving function comprises at least one of not switching off a backlight of the mobile communication terminal (100), increasing the time before a backlight of the mobile communication terminal (100) is switched off, maintaining a connection to a device, receiving additional information, activating services, storing time non-critical data and increasing processing power.

16. A method of communication between a network and a mobile communication terminal (100), the method is **characterized by** comprising:
receiving an indication from the mobile communication terminal (100) when at least one power saving function is not beneficial to the mobile communication terminal (100), applied according to network power management functions wherein the at least one power saving function is for a battery consumption optimization of the mobile communication terminal (100),
wherein the indication indicates that the mobile communication terminal is a device type that does not benefit from the at least one power saving function,
wherein the indication is received in a radio resource control, RRC, message,
wherein the RRC message is either an RRC connection setup complete message or a user equipment, UE, capability information message, and
wherein the indication has been set to a specific value in order to indicate that the mobile communication terminal does not benefit from the at least one power saving function.

17. A mobile communication terminal (100) for communicating with a network, the mobile communication terminal (100) being **characterized by** comprising:
an antenna (140) adapted to receive Radio Frequency, RF, signals containing messages comprising information related to at least one power saving function that may be performed by the mobile communication terminal;
an RF module (135) adapted to process the RF signals received by the antenna (140);
a keypad (120) adapted for inputting information from a user;
a storage unit (130) adapted to store the information related to the at least one power saving function;
a display (115) adapted to convey information to the user; and
a processing unit (110) adapted to determine that the mobile communication terminal does not benefit from at least one power saving function applied according to network power management functions, wherein the at least one power saving function is for a battery consumption optimization of the mobile communication terminal (100),
wherein
the processing unit (110) is adapted to provide an indication to the network, wherein the indication indicates that the mobile communication terminal is a device type that does not benefit from the at least one power saving function,
wherein the indication is provided in a radio resource control, RRC, message,
wherein the RRC message is at least one of an RRC connection setup complete message and a user equipment, UE, capability information message, and
wherein the indication is set to a specific value in order to indicate that the mobile communication terminal does not benefit from the at least one power saving function.

## Patentansprüche

1. Verfahren zur Kommunikation zwischen einem Netzwerk und einem mobilen Kommunikationsendgerät (100), wobei das Verfahren **gekennzeichnet ist durch**:
Bestimmen, in dem mobilen Kommunikationsendgerät, dass das mobile Kommunikationsendgerät nicht von zumindest einer Stromsparfunktion profitiert, die gemäß Netzwerkstromverwaltungsfunktionen angewendet wird, wobei die zumindest eine Stromsparfunktion für eine Batterieverbrauchsoptimierung des mobilen Kommunikationsendgerät (100) dient,
Bereitstellen, von dem mobilen Kommunikationsendgerät über eine drahtlose Kommunikationsanbindung, einer Angabe zu dem Netzwerk, wobei die Angabe angibt, dass das mobile Kommunikationsendgerät eine Vorrichtungsart ist, die nicht von der zumindest einen Stromsparfunktion profitiert, wobei
die Angabe in einer Funkressourcensteuer-, RRC-, Nachricht bereitgestellt wird, die entweder eine RRC - Verbindungsaufbauvollendungsnachricht oder eine Benutzereinrichtungs-, UE, - Fähigkeitsinformationsnachricht ist, und
wobei die Angabe auf einen spezifischen Wert gesetzt wird, um anzugeben, dass das mobile Kommunikationsendgerät nicht von der zumindest einen Stromsparfunktion profitiert.

2. Verfahren gemäß Anspruch 1 weiterhin umfassend:
Nicht- Durchführen der Stromsparfunktion, wenn die zumindest eine Stromsparfunktion als nicht profitabel bestimmt wird.

3. Verfahren gemäß Anspruch 1 oder 2, wobei die Angabe eine Seriennummer des mobilen Kommunikationsendgeräts (100) umfasst.

4. Verfahren gemäß zumindest einem der Ansprüche 1 bis 3, wobei das Netzwerk eine Funknetzwerksteuereinrichtung, RNC, umfasst.

5. Verfahren gemäß zumindest einem der Ansprüche 1 bis 4, wobei die Angabe bei Errichtung einer Verbindung mit dem Netzwerk bereitgestellt wird.

6. Verfahren gemäß Anspruch 5, weiterhin umfassend
Aktualisieren der Angabe, die von dem Netzwerk bereitgestellt ist, um wieder zu spiegeln, ob die Stromsparfunktion momentan profitabel für das mobile Kommunikationsendgerät (100) während der Verbindung mit dem Netzwerk ist.

7. Verfahren gemäß zumindest einem der Ansprüche 1 bis 6, wobei die Stromsparfunktion als profitabel bestimmt wird, wenn das mobile Kommunikationsendgerät (100) nicht mit einer externen Stromquelle verbunden ist.

8. Verfahren gemäß zumindest einem der Ansprüche 1 bis 7, wobei das Bestimmen weiterhin umfasst
Empfangen von Informationen einer externen Funktionseinheit.

9. Verfahren gemäß Anspruch 8, wobei die Informationen von dem Netzwerk empfangen werden.

10. Verfahren gemäß zumindest einem der Ansprüche 1 bis 7, wobei das Bestimmen durchgeführt ohne Empfangen irgendwelcher Informationen von einer externen Funktionseinheit wird.

11. Verfahren gemäß zumindest einem der Ansprüche 1 bis 10, wobei die Bestimmung auf zumindest darauf basiert, ob das mobile Kommunikationsendgerät (100) mit einer externen Stromzufuhr verbunden ist, und / oder ob das mobile Kommunikationsendgerät (100) mit einer weiteren Vorrichtung verbunden ist, die Strom zuführt.

12. Verfahren gemäß zumindest einem der Ansprüche 1 bis 11, weiterhin umfassend
Bereitstellen einer internationalen Mobilstationseinrichtungsidentitäts- und Softwareversionsnummer IMEI/IMEISV, für das Netzwerk.

13. Verfahren gemäß zumindest einem der Ansprüche 1 bis 12, weiterhin umfassend
Zurückweisen von zumindest einem Befehl, um die Stromsparfunktion durchzuführen, wenn sie als nicht profitabel bestimmt ist.

14. Verfahren gemäß Anspruch 13, weiterhin umfassend
Bereitstellen eines Ursachenwerts für die Zurückweisung des zumindest einen Befehls für das Netzwerk.

15. Verfahren gemäß Anspruch 2, wobei das Nicht- Durchführen der Stromsparfunktion zumindest eines umfasst aus Nicht- Abschalten eines Hintergrundlichts des mobilen Kommunikationsendgeräts (100), Erhöhen der Zeit, bevor ein Hintergrundlicht des mobilen Kommunikationsendgeräts (100) abgeschaltet wird, Beibehalten einer Verbindung mit einer Vorrichtung, Empfangen von zusätzlichen Informationen, Aktivieren von Diensten, Speichern von nicht zeitkritischen Daten und Erhöhung der Verarbeitungsleistung.

16. Verfahren zur Kommunikation zwischen einem Netzwerk und einem mobilen Kommunikationsendgerät (100), wobei das Verfahren **dadurch gekennzeichnet ist, dass** es umfasst:
Empfangen einer Angabe von dem mobilen Kommunikationsendgerät (100), wenn zumindest eine Stromsparfunktion für das mobile Kommunikationsendgerät (100) nicht profitabel ist, die gemäß Netzwerkstromverwaltungsfunktionen angewendet wird, wobei die zumindest eine Stromsparfunktion für eine Batterieverbrauchsoptimierung des mobilen Kommunikationsendgeräts (100) dient,
wobei die Angabe angibt, dass das mobile Kommunikationsendgerät eine Vorrichtungsart ist, die nicht von der zumindest einen Stromsparfunktion profitiert,
wobei die Angabe in einer Funkressourcensteuer-, RRC,- Nachricht empfangen wird,
wobei die RRC-Nachricht entweder eine RRC-Verbindungsaufbauvollendungsnachricht oder eine Benutzeraustattungs-, UE,-Fähigkeitsinformationsnachricht ist, und
wobei die Angabe auf einen spezifischen Wert gesetzte wurde, um anzugeben, dass das mobile Kommunikationsendgerät nicht von der zumindest einen Stromsparfunktion profitiert.

17. Mobiles Kommunikationsendgerät (100) zur Kommunikation mit einem Netzwerk, wobei das mobile Kommunikationsendgerät (100) **dadurch gekennzeichnet ist, dass** es umfasst:
eine Antenne (140), die eingerichtet ist, um Funkfrequenz-, RF,-Signale zu empfangen, die Nachrichten umfassen, die Informationen umfassen, die auf zumindest eine Stromsparfunktion bezogen sind, die durch das mobile Kommunikationsendgerät durchgeführt werden kann;
ein RF-Modul (135), das eingerichtet ist, um die RF-Signale zu verarbeiten, die durch die Antenne (140) empfangen sind;
ein Tastenfeld (120), das zur Eingabe von Informationen durch einen Benutzer eingerichtet ist;
eine Speichereinheit (130), die eingerichtet ist, um die Informationen zu speichern, die auf die zumindest eine Stromsparfunktion bezogen sind;
eine Anzeige (115), die eingerichtet ist, um Informationen dem Benutzer zu übermitteln; und
eine Verarbeitungseinheit (110), die eingerichtet ist, um zu bestimmen, dass das mobile Kommunikationsendgerät nicht von zumindest einer Stromsparfunktion profitiert, die gemäß Netzwerkstromverwaltungsfunktionen angewendet wird, wobei die zumindest eine Stromsparfunktion für eine Batterieverbrauchsoptimierung des mobilen Kommunikationsendgeräts (100) dient, wobei
die Verarbeitungseinheit (110) eingerichtet ist, um eine Angabe dem Netzwerk bereitzustellen, wobei die Angabe angibt, dass das mobile Kommunikationsendgerät eine Vorrichtungsart ist, die nicht von der zumindest einen Stromsparfunktion profitiert,
wobei die Angabe in einer Funkressourcensteuer, -RRC, -Nachricht bereitgestellt wird,
wobei die RRC-Nachricht zumindest eine einer RRC-Verbindungsaufbauvollendungsnachricht und einer Benutzereinrichtungs-, UE,-Fähigkeitsinformationsnachricht ist, und
wobei die Angabe auf einen spezifischen Wert gesetzt wird, um anzugeben, dass das mobile Kommunikationsendgerät nicht von der zumindest einer Stromsparfunktion profitiert.

## Revendications

1. Procédé de communication entre un réseau et un terminal (100) de communication mobile, le procédé étant **caractérisé par** :
la détermination, dans le terminal de communication mobile, que le terminal de communication mobile ne profite pas d'au moins une fonction d'économie d'énergie appliquée conformément à des fonctions de gestion d'énergie de réseau, dans lequel l'au moins une fonction d'économie d'énergie vise à une optimisation de consommation de batterie du terminal (100) de communication mobile,
la délivrance, du terminal de communication mobile par l'intermédiaire d'une liaison de communication sans fil, d'une indication au réseau, dans lequel l'indication indique que le terminal de communication mobile est un type de dispositif qui ne profite pas de l'au moins une fonction d'économie d'énergie, dans lequel
l'indication est délivrée dans un message de contrôle de ressources radio, RRC, qui est soit un message RRC d'établissement de connexion terminé, soit un message d'information de capacité d'équipement d'utilisateur, UE, et
dans lequel l'indication est fixée à une valeur spécifique afin d'indiquer que le terminal de communication mobile ne profite pas de l'au moins une fonction d'économie d'énergie.

2. Procédé selon la revendication 1, comprenant en outre
la non exécution de la fonction d'économie d'énergie lorsque l'au moins une fonction d'économie d'énergie est déterminée comme non profitable.

3. Procédé selon la revendication 1 ou 2, dans lequel l'indication comprend un numéro de série du terminal (100) de communication mobile.

4. Procédé selon l'une quelconque des revendications 1 à 3, dans lequel le réseau comprend un contrôleur de réseau radio, RNC.

5. Procédé selon l'une quelconque des revendications 1 à 4, dans lequel l'indication est délivrée à l'établissement d'une connexion avec le réseau.

6. Procédé selon la revendication 5, comprenant en outre
la mise à jour de l'indication délivrée au réseau pour refléter si la fonction d'économie d'énergie est actuellement profitable au terminal (100) de communication mobile lors de la connexion avec le réseau.

7. Procédé selon l'une quelconque des revendications 1 à 6, dans lequel la fonction d'économie d'énergie est déterminée comme profitable lorsque le terminal (100) de communication mobile n'est pas connecté à une source d'alimentation externe.

8. Procédé selon l'une quelconque des revendications 1 à 7, dans lequel la détermination comprend en outre la réception d'une information d'une entité externe.

9. Procédé selon la revendication 8, dans lequel l'information est reçue du réseau.

10. Procédé selon l'une quelconque des revendications 1 à 7, dans lequel la détermination est exécutée sans réception d'une quelconque information d'une entité externe.

11. Procédé selon l'une quelconque des revendications 1 à 10, dans lequel la détermination est basée sur un parmi que le terminal (100) de communication mobile est connecté à une source d'alimentation externe, et que le terminal (100) de communication mobile est connecté à un autre dispositif qui délivre une énergie.

12. Procédé selon l'une quelconque des revendications 1 à 11, comprenant en outre
la délivrance d'une identité internationale d'équipement de station mobile et d'un numéro de version de logiciel, IMEI/IMEISV, au réseau.

13. Procédé selon l'une quelconque des revendications 1 à 12, comprenant en outre
le rejet d'au moins une commande pour exécuter la fonction d'économie d'énergie lorsqu'elle est déterminée comme non profitable.

14. Procédé selon la revendication 13, comprenant en outre
la délivrance d'une valeur de cause pour le rejet de l'au moins une commande au réseau.

15. Procédé selon la revendication 2, dans lequel la non exécution de la fonction d'économie d'énergie comprend au moins un parmi la non extinction d'un rétroéclairage du terminal (100) de communication mobile, l'augmentation du délai avant qu'un rétroéclairage du terminal (100) de communication mobile ne soit éteint, le maintien d'une connexion à un dispositif, la réception d'informations additionnelles, l'activation de services, le stockage de données temporelles non critiques et l'augmentation d'une puissance de traitement.

16. Procédé de communication entre un réseau et un terminal (100) de communication mobile, le procédé **caractérisé en ce que** comprenant :
la réception d'une indication du terminal (100) de communication mobile lorsqu'au moins une fonction d'économie d'énergie n'est pas profitable au terminal (100) de communication mobile, appliquée conformément à des fonctions de gestion d'énergie de réseau, dans lequel l'au moins une fonction d'économie d'énergie vise à une optimisation de consommation de batterie du terminal (100) de communication mobile,
dans lequel l'indication indique que le terminal de communication mobile est un type de dispositif qui ne profite pas de l'au moins une fonction d'économie d'énergie,
dans lequel l'indication est reçue dans un message de contrôle de ressources radio, RRC,
dans lequel le message RRC est soit un message RRC d'établissement de connexion terminé, soit un message d'information de capacité d'équipement d'utilisateur, UE, et
dans lequel l'indication a été fixée à une valeur spécifique afin d'indiquer que le terminal de communication mobile ne profite pas de l'au moins une fonction d'économie d'énergie.

17. Terminal (100) de communication mobile pour communiquer avec un réseau, le terminal (100) de communication mobile étant **caractérisé en ce que** comprenant :
une antenne (140) adaptée à recevoir des signaux en fréquence radio, RF, contenant des messages comprenant des informations se rapportant à au moins une fonction d'économie d'énergie qui peut être exécutée par le terminal de communication mobile ;
un module RF (135) adapté à traiter les signaux RF reçus par l'antenne (140) ;
un clavier (120) adapté à l'entrée d'informations par un utilisateur ;
une unité (130) de stockage adaptée à stocker les informations se rapportant à l'au moins une fonction d'économie d'énergie ;
un afficheur (115) adapté à présenter des informations à l'utilisateur ; et
une unité (110) de traitement adaptée à déterminer que le terminal de communication mobile ne profite pas d'au moins une fonction d'économie d'énergie, appliquée conformément à des fonctions de gestion d'énergie de réseau, dans lequel l'au moins une fonction d'économie d'énergie vise à une optimisation de consommation de batterie du terminal (100) de communication mobile, dans lequel
l'unité (110) de traitement est adaptée à délivrer une indication au réseau, dans lequel l'indication indique que le terminal de communication mobile est un type de dispositif qui ne profite pas de l'au moins une fonction d'économie d'énergie,
dans lequel l'indication est délivrée dans un message de contrôle de ressources radio, RRC,
dans lequel le message RRC est soit un message RRC d'établissement de connexion terminé, soit un message d'information de capacité d'équipement d'utilisateur, UE, et
dans lequel l'indication est fixée à une valeur spécifique afin d'indiquer que le terminal de communication mobile ne profite pas de l'au moins une fonction d'économie d'énergie.
